(19) Europäisches Patentamt
European Patent Office
Office européen des brevets

(11) EP 2 416 520 A1

(12) EUROPEAN PATENT APPLICATION

(43) Date of publication:
08.02.2012 Bulletin 2012/06

(51) Int Cl.:
H04L 9/00 (2006.01)          G06T 1/00 (2006.01)

(21) Application number: 10305857.4

(22) Date of filing: 03.08.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

• Baum, Peter Georg
  30539 Hannover (DE)
• Gries, Ulrich
  30419 Hannover (DE)
• Voessing, Walter
  30455 Hannover (DE)

(71) Applicant: Thomson Licensing
92130 Issy-les-Moulineaux (FR)

(72) Inventors:
• Arnold, Michael
  30916 Isernhagen (DE)

(74) Representative: Hartnack, Wolfgang
Deutsche Thomson OHG
European Patent Operations
Karl-Wiechert-Allee 74
30625 Hannover (DE)

(54) Method and system for protecting by watermarking against non-authorised use original audio or video data which are to be presented

(57) For protecting by watermarking against non-authorised use, e.g. non-authorised recording or copying, original audio or video data which are to be presented in a digital cinema, a sender site generates from the original signal at least two differently pre-watermarked versions for successive blocks or frames of the signal, wherein these versions are derived by applying a repeated watermark symbol value to a version and different watermark symbol values to the different versions. The pre-watermarked signal versions are encrypted and transferred e.g. as data files to a digital cinema unit in which they are decrypted. According to the values of a desired watermark information word, corresponding frames or blocks from said decrypted and pre-watermarked versions are assembled in a successive manner, so as to provide and present a watermarked version of said original audio or video signal that carries said watermark information word.

Fig. 4

**Description**

The invention relates to a method and to a system for protecting by watermarking against non-authorised use, e.g. non-authorised recording or copying, original audio or video data which are to be presented, e.g. in a digital cinema.

Background

Audio Watermarking is one security technology for content protection. The watermark (WM) is a signature embedded within the data of the original audio signal and, in addition to being inaudible to the human ear, should also be statistically undetectable, and should be resistant to any attempts of removing it. For example in a Digital cinema application, the requirements of a watermarking system can be specified on the basis of a set of properties: in addition to the general requirements of quality of the watermarked copies and robustness of the embedded watermarks, such cinema application includes additional security constraints which are to be complied with.

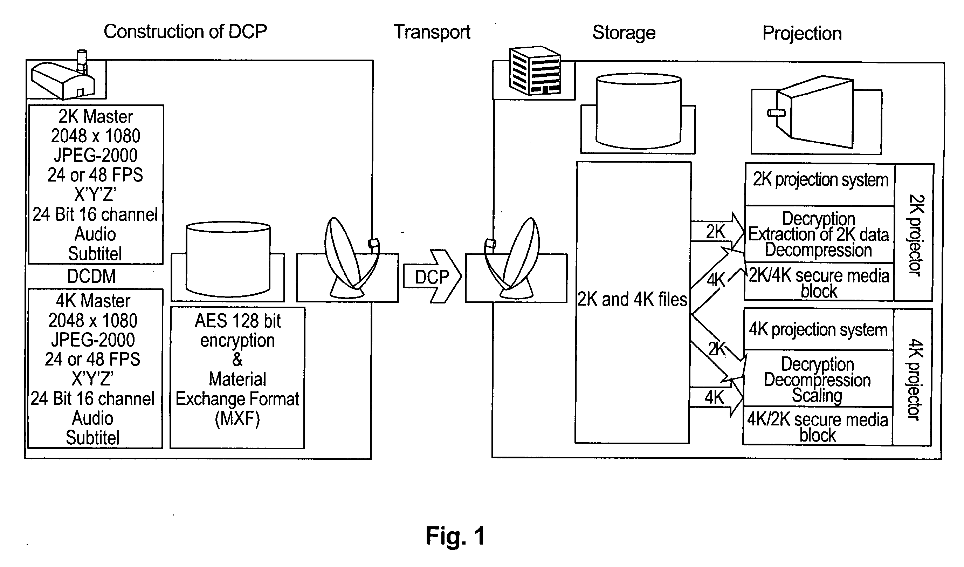

'Digital Cinema Initiatives' (DCI) is an entity founded by seven motion picture studios to establish specifications for an industry-wide standard for Digital cinema. A DCI Specification Version 1.2 was published on http: //www.dcimovies.com . The workflow for movie production includes mastering, distribution and playback in the theatres, as depicted in Fig. 1.
In the Digital cinema scenario different components are specified, e.g.:

- Digital Cinema Distribution Master (DCDM);
- Compression specifies the DCI compliant JPEG 2000 code stream and the JPEG 2000 decoder;
- Packaging;
- Transport;
- Theatre System;
- Projection;
- Security.

The Digital cinema distribution master DCDM shall be based on a hierarchical image structure that supports 2K and 4K master. The Digital cinema system is built on a file-based design, i.e. the complete content is made up of data stored in files which are organised around the image frames. The included DCDM audio data has a bit depth of 24 bit/sample and a sample rate of 48 or 96kHz. The file format is PCM WAVE and the data are not compressed.

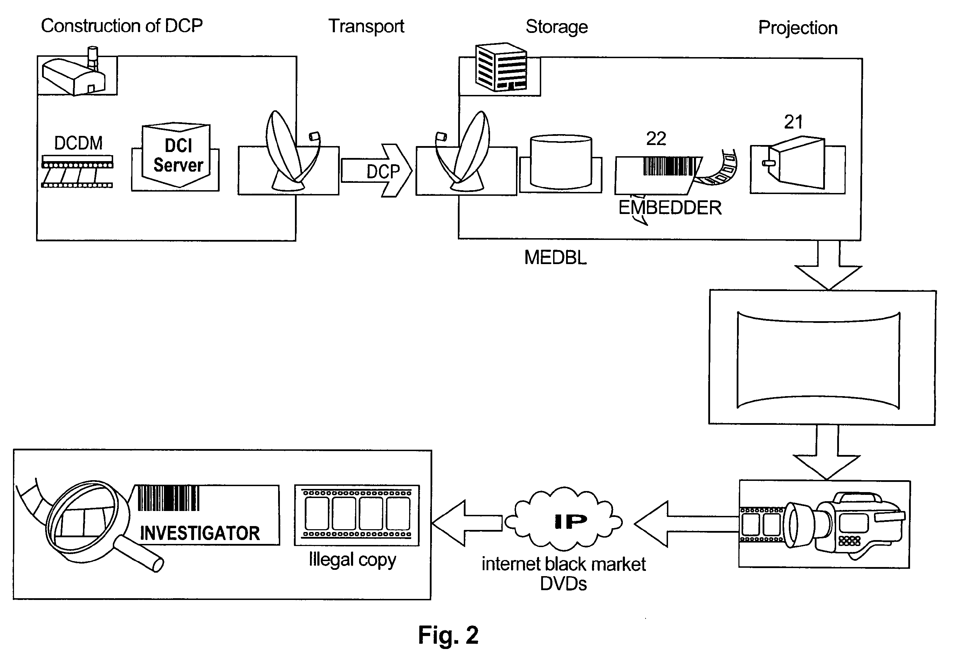

In the Digital cinema system, the security system as depicted in Fig. 2 has different requirements which are implemented with appropriate security mechanisms. This includes cryptographic security from distribution to theatrical playback or projection 21. Encryption protects against illegal access, unauthorised copying, editing and playback. The encrypted content is distributed as a single Digital Cinema Package (DCP) to every theatre. The DCP content components are selectively encrypted by the rights owner (e.g. studio or distributor). The logging mechanisms log the access to protected content. Watermarking and Fingerprinting are implemented to enable forensic tracking.
Watermarking is implemented in embedder 22 within the media block MEDBL of the server located in the theatre.
The most important requirement regarding the watermarking of audio data is that the watermarking is not audible in ABX listening tests. The payload to be embedded includes an identification of the theatre by using 19 bit word length, corresponding to $2^{19}$=524.288 possible locations. In addition a time stamp is embedded which changes every 15 minutes and is repeated every year, requiring 16 bits for its binary representation:

```
4 time stamps/h * 24h/d * 366d/y = 35136 time stamps/h
```

Thus, the total length $l$(w) of watermark w information bits is $l$(w)= 19+16 bits = 35 bits. The data-rate is set to

```
l(w) bit/5 min = 7 bit/min
```

Since the embedding of the watermark is to be performed just before playback in the theatre it is to be performed in real-time or even faster. The minimal time segment required for detection should not exceed 30 minutes.

In the following, the original or carrier object is denoted by $c_o$. In the notation used, $c_o[i]$, $i$=1,...,$l_{Co}$ represents the samples of the original signal in the time domain, wherein $l_{Co}$ denotes the number of samples of track $c_o$. E.g. for a sampling rate $f_s$=44.1kHz one second corresponds to a number of 44100 samples. According to the amplitude resolution of 8 or 16 bit, the range of sequence of numbers is $c_o \in \{0,255\}$ or $c_o \in \{-32768,+32767\}$ $\forall i$. An additional index 'j' of the carrier elements $c_{oj}$ denotes a subset of the audio signal. Very likely, all audio watermarking algorithms split the audio signal into different overlapping or nonoverlapping blocks, usually same-size blocks. For this reason $c_{oj}[i]$ denotes the i-th sample in the j-th block, with length $1_{coj}$. The individual blocks are used to embed one bit of information of the whole watermark w.

Invention

Due to the embedding of the watermark just before the presentation of the movie as shown in Fig. 2, that embedding is to be performed in real-time in the media block MEDBL of the theatre. This requires the audio watermarking algorithm to be implemented on a dedicated DSP hardware at receiver site (in the media server). But this solution has several disadvantages due to usage of DSP hardware and watermarking at receiver (theatre) site:

- ● Integration of DSP hardware at receiver site is expensive;
- ● Updates of the watermarking algorithm (due to detected security flaws) have to be performed in each single receiver (theatre), which is time consuming and expensive;
- ● A potential security flaw is included in such system because the original content is accessible after decryption and just before the embedding of the watermark in the media stream;
- ● The watermarking key is to be stored at, or transmitted to, the receiver site for the embedding, increasing the risk of cracking this security processing;
- ● The embedding of a correct time stamp cannot be ensured. A potential adversary could reverse-engineer the watermarking hardware and embed an incorrect time stamp by using previous decrypted versions of the frames having different watermark symbols embedded. Nevertheless the adversary can only construct watermarked copies with a time stamp within a range that can be controlled at sender site;
- ● Switching to a different (possible non real-time) watermarking processing may not be possible due to the constraints of the integrated DSP hardware;
- ● Combining different watermarking procedures for watermarking the same media stream is impossible due to the hardware implementation of the processing.

These kinds of problems will occur in all applications where embedding is done at the receiver site and the watermarking algorithm is implemented in hardware.

A problem to be solved by the invention is to increase the overall security of such protection processing or system. This problem is solved by the method disclosed in claim 1. A system that utilises this method is disclosed in claims 2 and 3.

The invention shifts the burden of embedding the watermarks from the receiver site (theatre) to the sender site (post-production, studio) by using pre-watermarked and encrypted copies:

- ● A dedicated DSP implementation of the watermarking algorithm is no longer necessary. The watermarking can be carried out in software. This facilitates use of cheaper hardware;
- ● Updates of a new watermarking processing can be carried out easily because no hardware update is required;
- ● Access to the watermarking embedder and to the keys is not possible, thus preventing security problems regarding the watermarking encoding.

Several frame-wise pre-watermarked and encrypted copies of an audio PCM file are delivered. Frame-wise or block-wise watermarking and encryption is carried out at sender site (post-production or studio), and the frame/block-wise encrypted files are packed and delivered to the receiver site (theatre). The different versions of the copies or tracks represent encrypted candidate watermarking with different symbols of the watermark. For example, the first copy of the audio or video signal is watermarked at sender site with value '0' watermark symbols for each block or frame, and the second copy is watermarked at sender site with value '1' watermark symbols for each block or frame. A further copy can contain sync watermark symbols.

In addition to the files delivered, a key sequence is transmitted to each receiver consisting of the keys for decrypting individual frames or blocks identified by the frame/ block number and the symbol embedded. At receiver site the decryption can be performed on the proper frames only, according to the transmitted key sequence. The pre-watermarked and decrypted frames are used to create a single watermarked copy that implicitly carries the correct watermark information bits, e.g. ID and time stamp in a DCI application. For creating that single watermarked copy, based on the bits or values of the desired watermark information bit word, the corresponding frames or blocks from the received or stored copies are taken and are assembled in a successive manner.

Due to pre-watermarking of the content at sender site, the embedding of the watermark has the following advantages:

● Dedicated implementation of the watermarking processing in hardware is not necessary, reducing the costs of the hardware at the receiver site;

● Updating to a different watermarking processing is easy because no hardware update is necessary;

● Construction speed of the watermarked tracks depends on the I/O performance only and not on the speed of the underlying watermarking processing. Therefore a switching is possible to sophisticated watermarking processings which can not run in real-time;

● Combinations of different watermarking processings can be used, which alternately embed the watermark and thereby increase the robustness of the forensic tracking system. This can be controlled at the construction site by providing timing information in case of different block sizes;

● The receiver (theatre) site receives pre-watermarked copies having already a watermark (the ID of the cinema) embedded, which prevents unauthorised embedding of false watermarks at receiver site;

● The security of the watermarking system is ensured, since reverse-engineering of the watermarking algorithm is not possible. Furthermore there is no access to the keys of the watermarking system due to the pre-watermarking at sender site.

Nevertheless, the invention described so far has still two disadvantages:

● There is a potential security vulnerability at theatre site because the decrypted pre-watermarked copies can be used to construct a watermark carrying not the correct watermark (for example correct ID of a cinema but a different time-stamp);

● Due to using pre-watermarked copies the required bandwidth is nearly doubled.

Therefore the encryption can be carried out block-wise as described below.

In principle, the inventive method is suited for protecting by watermarking against non-authorised use, e.g. non-authorised recording or copying, an original audio or video data signal that is to be presented, said method including the steps:

- at sender site, generating from said original audio or video data at least two differently pre-watermarked versions for successive blocks or frames of said original audio or video data, wherein said versions are derived by applying a repeated watermark symbol value to a version and different watermark symbol values to the different versions, and encrypting said versions using corresponding encryption keys;

- transferring said pre-watermarked and encrypted versions and said encryption keys to one or more receivers or receiver entities, e.g. as one or more data files;

- at receiver site, decrypting said pre-watermarked and encrypted versions of audio or video data using said encryption keys and assembling, according to the values of a desired watermark information word, corresponding frames or blocks from said decrypted and pre-watermarked versions in a successive manner, so as to provide a watermarked version of said original audio or video data that carries said watermark information word;

- presenting said decrypted and watermarked version of said original audio or video data.

In principle, the inventive sender system is suited for protection by watermarking against non-authorised use, e.g. non-authorised recording or copying, of an original audio or video data signal that can be presented at a receiver site, said sender system including:

- means being adapted for generating from said original audio or video data at least two differently pre-watermarked versions for successive blocks or frames of said original audio or video data, wherein said versions are derived by applying a repeated watermark symbol value to a version and different watermark symbol values to the different versions, and by encrypting said versions using corresponding encryption keys;

- means being adapted for transferring said pre-watermarked and encrypted versions and said encryption keys to one or more receivers or receiver entities, e.g. as one or more data files,

for decrypting at said receiver site said pre-watermarked and encrypted versions of audio or video data using said encryption keys and assembling, according to the values of a desired watermark information word, corresponding frames or blocks from said decrypted and pre-watermarked versions in a successive manner, so as to provide for presentation a watermarked version of said original audio or video data that carries said watermark information word.

In principle, the inventive receiver system is suited for protection by watermarking against non-authorised use, e.g. non-authorised recording or copying, of an original audio or video data signal that is to be presented, said receiver system receiving or storing at least two differently pre-water-marked versions for successive blocks or frames of said original audio or video data, wherein said versions were derived by applying a repeated watermark symbol value to a version and different watermark symbol values to the different versions, and by encrypting said versions using corresponding encryption keys, said receiver system also receiving or storing said encryption keys, and said receiver system including:

- means being adapted for decrypting said pre-watermarked and encrypted versions of audio or video data using said encryption keys and assembling, according to the values of a desired watermark information word, corresponding frames or blocks from said decrypted and pre-watermarked versions in a successive manner, so as to provide a watermarked version of said original audio or video data that carries said watermark information word;

- means being adapted for presenting said decrypted and watermarked version of said original audio or video data.

Advantageous additional embodiments of the invention are disclosed in the respective dependent claims.

Drawings

Exemplary embodiments of the invention are described with reference to the accompanying drawings, which show in:

Fig. 1    Distribution workflow for a Digital cinema application from packaging to projection;

Fig. 2    Application of watermarking technology in the Digital cinema;

Fig. 3    Preparation of pre-watermarked and encrypted copies;

Fig. 4    Constructing a watermarked audio track;

Fig. 5    Preparation of pre-watermarked and block-wise encrypted copies;

Fig. 6    Constructing a watermarked track from block-wise decrypted copies;

Fig. 7    Pre-watermarked and encrypted copies with variable part;

Fig. 8    Pre-watermarked and encrypted copies with difference signals.

Exemplary embodiments

*Pre-watermarking and encryption*

According to the invention, several block-wise pre-watermarked tracks for one audio PCM file are delivered. All pre-watermarked tracks are encrypted and stored in a file. At receiver site the pre-watermarked tracks are decrypted and, depending on the watermark information word (e.g. ID of the theatre and the time-stamp), the watermarked audio stream is constructed for the presentation.
The inventive processing is portable to other watermarking systems if it conforms to the following criteria:

● The underlying watermarking system operates in a block-based manner. In fact, most watermarking systems divide the original signal into disjoint regions, either in space or in time. In audio watermarking systems, the audio track is split into a temporal sequence of consecutive audio blocks.
● Embedding of the watermark in one block does not depend on the content of adjacent blocks even if an overlap occurs between the different blocks. At least, such dependency can be ignored due to an insignificant decrease of the quality of the watermarked track and the robustness of the watermark.

Besides the above-mentioned characteristics, in the special case of Adaptive Spread Phase Modulation (ASPM) processing the following can be assumed:

● The N information bits of a watermark w are represented by a sequence of separate symbols $a_i$, $i=1,...,N$, and each symbol is embedded into one block consisting of $N_{SB}$ sub-blocks;

● In the watermarking system, each sub-block contains the same number of samples determined by usage of a psycho-acoustic model. For example, the size $1$ of a sub-block is $1$ ($c_o{}^{SB}$) = 1024.

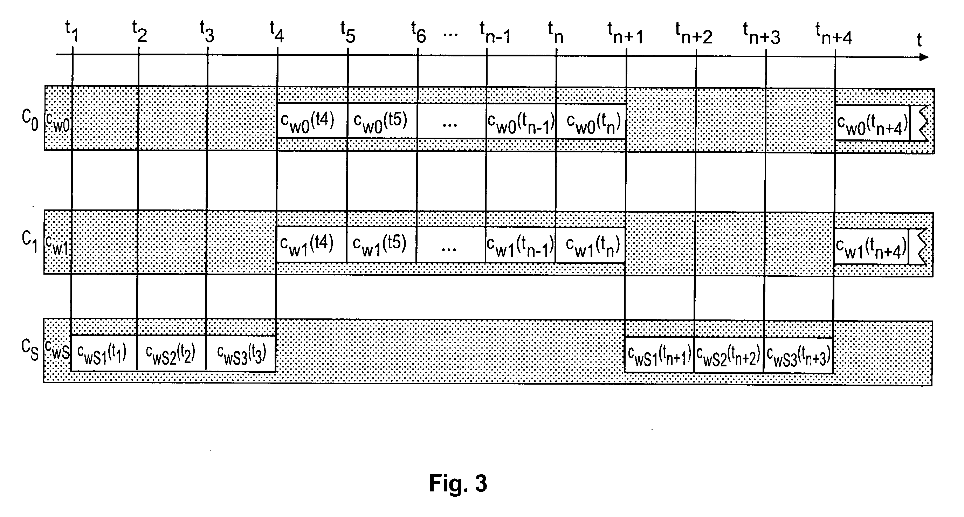

Before the audio tracks are delivered, the original file data $c_{org}$ is watermarked $N_A$ times with special watermarks $w_i$, $i$=1,...,$N_A$, resulting in $N_A$ watermarked copies. Fig. 3 shows versus time t two versions $c_0$ $c_1$ of the same data file, and a version $c_S$ with synchronisation symbols embedded, each version of which is watermarked (and encrypted) differently. Each one of the watermarked track copies is represented by a temporal sequence of identical watermark information bit patterns out of '0', '1', '$S_1$' '$S_2$', '$S_3$' ($A$={0,1, $S_1$, $S_2$, $S_3$}, $N_A$=5) . For example, in file version $c_0$ the bit pattern '000...00' is used to generate watermark symbol $w_0$ for the time periods $t_4$ to $t_n$ and in file version $c_1$ the bit pattern '111...11' is used to generate watermark symbol $w_1$. Such data preparation is referred to as pre-watermarking. The embedding of these watermarks is performed by using a unique key K for generating the bit pattern representing the different bits or sync words '0','1','$S_1$', '$S_2$','$S_3$'. In the special case of ASPM processing being used, three different sequential synchronisation sequences ('$S_1$','$S_2$','$S_3$') have to be inserted at the beginning of the watermarks $w_0$ / $w_1$ as shown in Fig. 3 in version $c_S$ of the data file, in order to ensure success of the detection against other signal processing operations. Since the length of the watermark information word is $1$(w)=35 bits in the example application, the synchronisation bits have a fixed block position and need not be stored as a separate pre-watermarked copy. This reduces the number of necessary pre-watermarked copies to a number lower than $N_A$=2 if all watermarked blocks are counted, as shown in Fig. 3.

In order to increase the security, the watermark keys can be different for the individual audio files. However, this results in an identification problem during watermark detection. But this problem can be solved by incorporating fingerprinting techniques.

The watermarked copies of the track are encrypted e.g. as a whole by $C_i$ = $E_{K_E}(C_{W_i})$, $i$=0, 1, $S$ with the encryption function $E_{KE}()$ using key $K_E$ (cf. Fig. 3). The resulting encrypted files are packed and delivered or transferred to the receiver (theatre). In the Digital cinema application the pre-watermarked encrypted files are stored in the media server in the cinema.

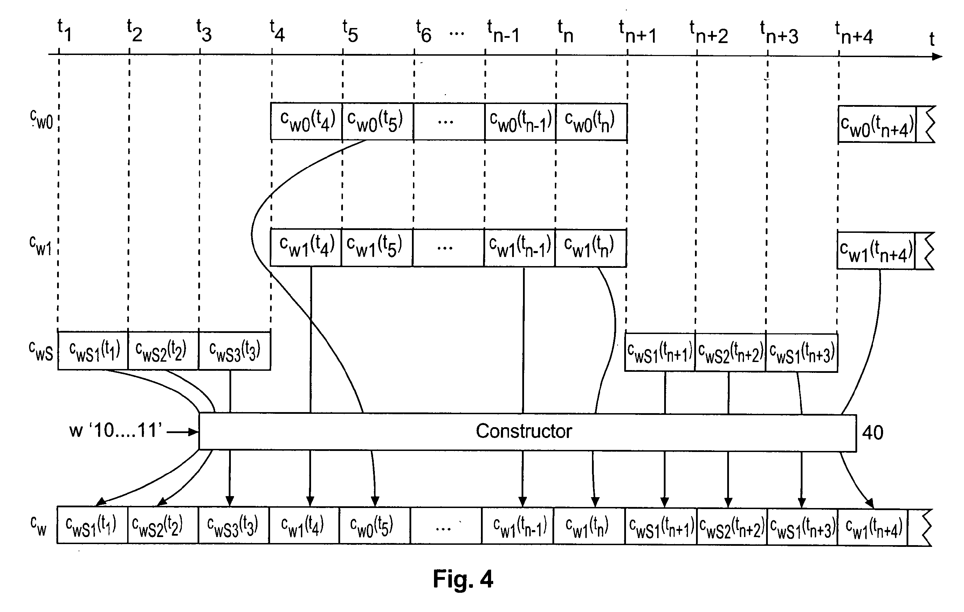

Before presenting an audio track at receiver site the pre-watermarked copies are decrypted $C_{W_i}$ = $D_{K_E}(C_i)$, $i$=0, 1, $S$ with the decryption function $D_{KE}()$ using the same key $K_E$. The embedding of the $1$ (w) watermark information bits in an audio track is performed by constructing block or frame-wise the watermarked copy from the pre-watermarked copies. The whole number of blocks is $n_F$ = $n_S$ + $1$(w), with 1(w)=35 watermarked blocks and $n_S$=3 synchronisation blocks. Figure 4 shows an example of embedding a watermark for bit sequence '10...11' by constructing in a constructor 40 the required track $c_w$. The upper part of Fig. 4 corresponds to Fig. 3. According to a current bit value 'i' in the watermark bit sequence w = '10...11', pre-watermarked section $c_{wi}(t_x)$ is taken and assembled in a successive manner by the constructor 40 from pre-watermarked tracks $c_0$ or $c_1$.

The content of the watermark information word 'w' can be determined individually by the present receiver.

Advantageously, the construction speed of the watermarked track depends on the I/O performance only and not on the kind of watermarking processing being used. The watermarking performed in the data preparation step is the same for all receivers (cinemas) and therefore has to be performed only once for an audio track.

*Block-wise encryption*

In the embodiment described before, it could be possible to construct watermarked tracks carrying the wrong watermark (i.e. cinema ID). The following embodiment modifies the pre-watermarking and construction processing.

The watermarking performed to create the pre-watermarked copies is identical to the previous embodiment. However, the watermarked copies are encrypted block-wise.

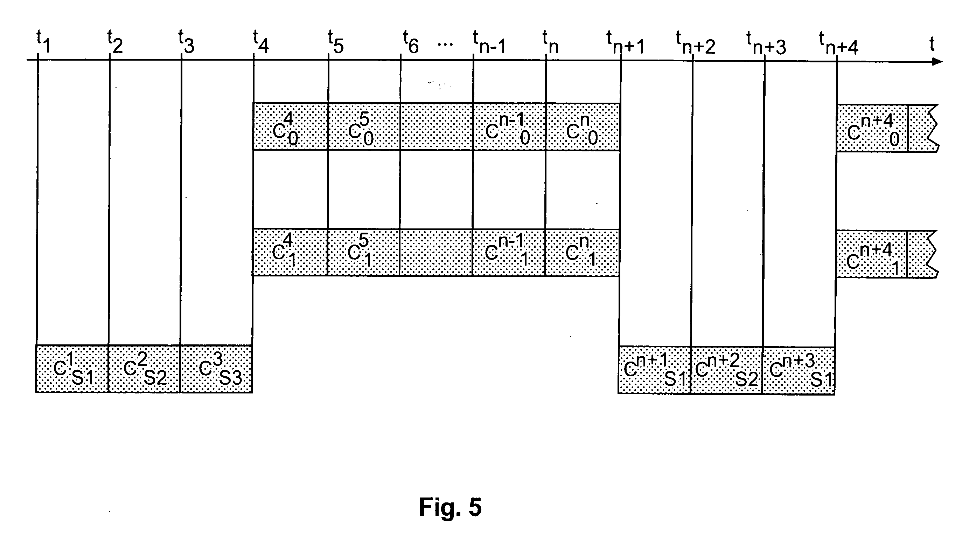

Each block $C^j_i$ = $E_K j(c_{wi}j(t_j)$ ), $i$=0, 1, S, $j$=1, ... , $n$ is encrypted by using a different key $Kj$ for the block starting at position $t_j$ in the watermarked track and for symbol type i, as depicted in Fig. 5. The block-wise encrypted files are packed and delivered, e.g. to the theatre where they are stored in the media server. In addition to the media files, a key sequence

$$K_W = \{K_1 j\}^{j=1,...,n}_{i='S1','S2','S3',w}$$

is transmitted to each receiver, consisting of the keys required for decrypting only those blocks which are carrying the bits for constructing the watermark.

For Digital cinema application, the watermark w = {$w_{ID}$,$w_{time}$} consists of the ID of the cinema and the time stamp. The key sequence can be partitioned into a fixed part consisting of the synchronisation blocks $K_s$ = {$K_{S1}{}^1$, $K_{S2}{}^2$,..., $K_{sn}{}^ns$} and the ID of the cinema $K_{ID}$ = {$K_1{}^ns+1$, $K_2{}^{ns+2}$,..., $K_{1(W_{ID})}{}^n{}_s+1{}_{(W_{ID})}$}, and a variable part for the time stamp $K_{time}$ = {$K_1{}^n{}_S+1{}_{(W_{ID})}$,..., $K_1(w_{time})^n$}.

$$K_w = \{K_S, K_{ID}, K_{time}\}, \quad n = n_S + l(w_{ID}) + l(w_{time}) = 38 \qquad (1)$$

consists of 35 bits for the DCI watermark and 3 synchronisation bits.

Different time stamps can be implemented by varying the last sub-sequences $K_{time}$. This offers the possibility to limit the time stamps to a certain period by transmitting only the corresponding key sequences.

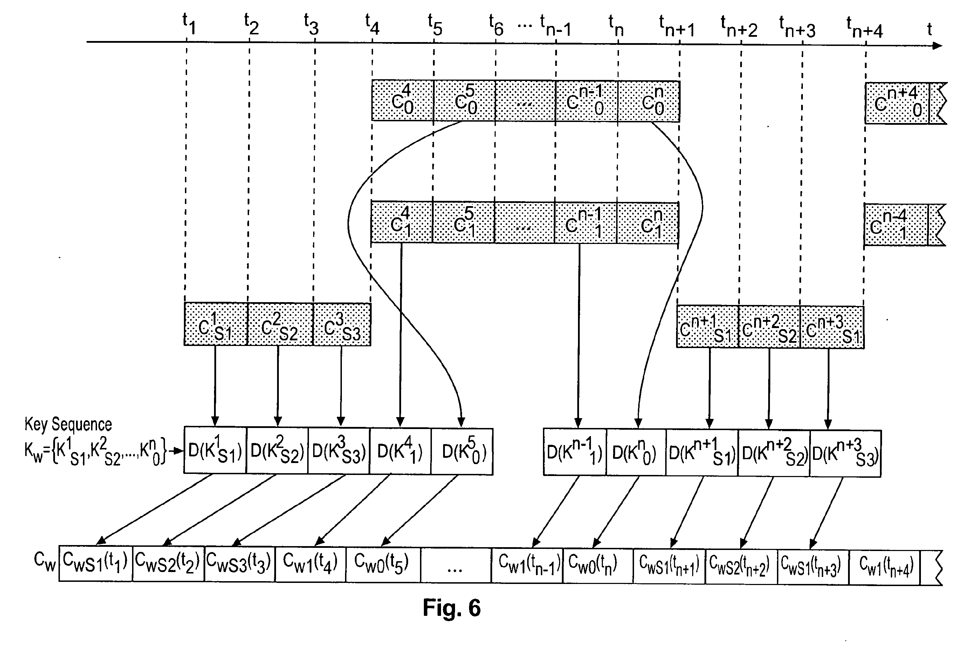

By using the key sequence $K_{wID}$, $K_{wtime}$ the receiver (theatre) will be able to properly decrypt only the blocks having the watermarks $w_{ID}$ and $w_{time}$ embedded, by getting the block at position j from encrypted block $c_{wi}(t_j) = D(c_i^j, K_i^j)$, i=0, 1, S, j=1,...,n, as depicted in Fig. 6 (the upper part corresponds to Fig. 5).

In addition to the previous embodiment, this embodiment has the advantage that the correct watermark (and thereby the ID of the cinema) is implicitly embedded because only the proper blocks can be decrypted by the assigned key sequence. But there are remaining disadvantages:

● In the Digital cinema application the embedding of the correct time stamp cannot be ensured by this processing. An potential adversary can embed an incorrect time stamp by using already decrypted versions of the blocks having different symbols embedded. Nevertheless, watermarked copies can be constructed with a time stamp only within a range according to the transmitted key sub-sequences $K_{time}$. An incorrect time stamp can be detected due to the knowledge of the transmitted key sequences.

● The bandwidth is nearly doubled since it is still necessary to send two pre-watermarked and block-wise encrypted copies.

*Reducing the bandwidth*

A reduction of bandwidth can be achieved by taking into account the static and the dynamic part of the watermark. This can be performed by sending the pre-watermarked and block-wise encrypted part of the stream directly with the fixed watermark portion carrying synchronisation bits and the ID of the watermark. Only for the variable part the two versions of the pre-watermarked and encrypted blocks are sent to the receiver (theatre). The time stamp range can be controlled at sender site.

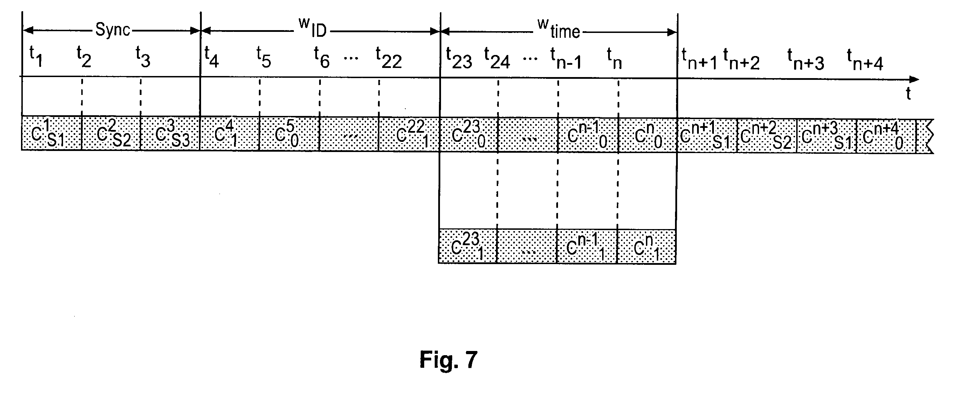

The watermark embedding is the same as presented in the previous embodiment, whereby selecting the blocks for decryption has to be done only for the variable part $w_{time}$ of the watermark. This is depicted in Fig. 7.

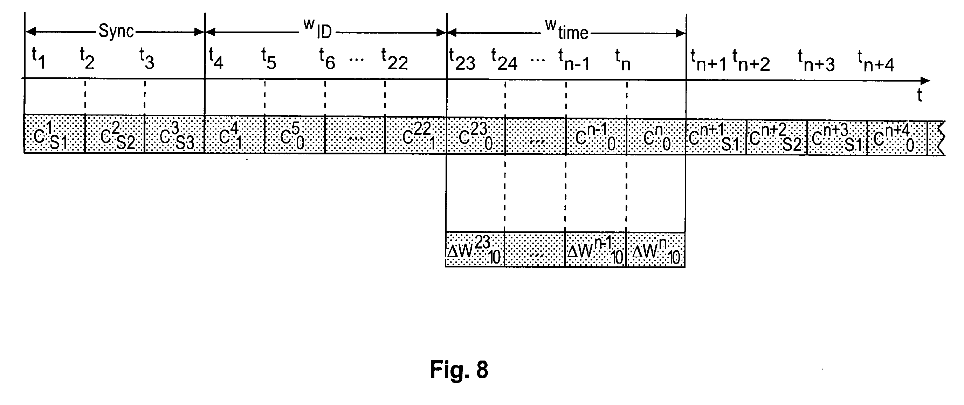

A further reduction of the necessary bandwidth can be achieved by sending for the variable portion $w_{time}$ of the watermark a track marked with one watermark symbol and the difference of the watermark signals for different watermark symbols. As depicted in Fig. 8, for each block at position $t_j$ a watermarked version $c_{w0}(t_j)$ for the first symbol '0' is embedded, as well as the difference $\Delta w_{i0}(t_j)$ to the watermark signals of all other symbols:

$$c_{w0}(t_j) = c_0(t_j) + w_0(t_j) \qquad (2)$$

$$c_{wi}(t_j) = c_{w0}(t_j) - w_0(t_j) + w_i(t_j)$$
$$= c_{w0}(t_j) + \Delta w_{i0}(t_j), \quad i=1,\ldots,N_A-1 \qquad (3)$$

Because the watermark difference signals have a lower dynamic range than the original watermark signal they can be compressed effectively.

For embedding the watermark by construction, in addition to the selection of the blocks from the variable watermark portion $w_{time}$ as presented in the previous embodiment a block-wise addition of the difference signals according to equation (3) is performed if a symbol other than that of the pre-watermarked copy is to be embedded.

As mentioned earlier, the invention is applicable to Digital cinema applications. It is further applicable to all applications where a watermark embedding step has to be performed at receiver site in an insecure device.

**Claims**

**1.** Method for protecting by watermarking against non-authorised use, e.g. non-authorised recording or copying, original audio or video data which are to be presented, said method including the steps:

- at sender site, generating from said original audio or video data at least two differently pre-watermarked versions ($c_0$, $c_1$) for successive blocks or frames ($t_4$, $t_5$, ..., $t_{n-1}$, $t_n$) of said original audio or video data, wherein said versions are derived by applying a repeated watermark symbol value to a version and different watermark symbol values ($w_0$, $w_1$) to the different versions, and encrypting said versions using corresponding encryption keys ($K_w$, $K_E$) ;
- transferring said pre-watermarked and encrypted versions and said encryption keys to one or more receivers or receiver entities, e.g. as one or more data files;
- at receiver site, decrypting said pre-watermarked and encrypted versions of audio or video data using said encryption keys ($K_E$) and assembling (40, 22), according to the values of a desired watermark information word (w), corresponding frames or blocks ($c_{w0}$ ($t_4$) , $c_{w1}$ ($t_4$), $c_{w0}$($t_5$), $c_{w1}$ ($t_5$),..., $c_{w0}$ ($t_{n-1}$), $c_{w1}$ ($t_{n-1}$), $c_{w0}$ ($t_n$), $c_{w1}$ ($t_n$)) from said decrypted and pre-watermarked versions in a successive manner, so as to provide a watermarked version ($c_w$) of said original audio or video data that carries said watermark information word (w);
- presenting (21) said decrypted and watermarked version of said original audio or video data.

2. Sender system for protection by watermarking against non-authorised use, e.g. non-authorised recording or copying, of original audio or video data which can be presented at a receiver site, said sender system including:

- means being adapted for generating from said original audio or video data at least two differently pre-watermarked versions ($c_0$, $c_1$) for successive blocks or frames ($t_4$, $t_5$, ..., $t_{n-1}$, $t_n$) of said original audio or video data, wherein said versions are derived by applying a repeated watermark symbol value to a version and different watermark symbol values ($w_0$ $w_1$) to the different versions, and by encrypting said versions using corresponding encryption keys ($K_w$, $K_E$);
- means being adapted for transferring said pre-watermarked and encrypted versions and said encryption keys to one or more receivers or receiver entities, e.g. as one or more data files,

for decrypting at said receiver site said pre-watermarked and encrypted versions of audio or video data using said encryption keys ($K_E$) and assembling (40, 22), according to the values of a desired watermark information word (w), corresponding frames or blocks ($c_{w0}$ ($t_4$), $c_{w1}$ ($t_4$), $c_{w0}$ ($t_5$), $c_{w1}$ ($t_5$),..., $c_{w0}$ ($t_{n-1}$), $c_{w1}$ ($t_{n-1}$), $c_{w0}$ (tn), $c_{w1}$ ($t_n$) ) from said decrypted and pre-watermarked versions in a successive manner, so as to provide for presentation a watermarked version ($c_w$) of said original audio or video data that carries said watermark information word (w) .

3. Receiver system for protection by watermarking against non-authorised use, e.g. non-authorised recording or copying, of original audio or video data which are to be presented, said receiver system receiving or storing at least two differently pre-watermarked versions ($c_0$, $c_1$) for successive blocks or frames ($t_4$, $t_5$, ..., $t_{n-1}$, $t_n$) of said original audio or video data, wherein said versions were derived by applying a repeated watermark symbol value to a version and different watermark symbol values ($w_0$, $w_1$) to the different versions, and by encrypting said versions using corresponding encryption keys ($K_w$, $K_E$), said receiver system also receiving or storing said encryption keys, and said receiver system including:

- means (22, 40) being adapted for decrypting said pre-watermarked and encrypted versions of audio or video data using said encryption keys ($K_E$) and assembling, according to the values of a desired watermark information word (w), corresponding frames or blocks ($c_{w0}$ ($t_4$), $c_{w1}$ ($t_4$), $c_{w0}$ ($t_5$), $c_{w1}$ ($t_5$),..., $c_{w0}$ ($t_n$-$_1$), $c_{w1}$ ($t_{n-1}$), $c_{w0}$ ($t_n$), $c_{w1}$ ($t_n$) ) from said decrypted and pre-watermarked versions in a successive manner, so as to provide a watermarked version ($c_w$) of said original audio or video data that carries said watermark information word (w);
- means (21) being adapted for presenting said decrypted and watermarked version of said original audio or video data.

4. Method according to claim 1, or system according to claim 2 or 3, wherein said sender and receiver sites represent a Digital cinema system according to the DCI specification.

5. Method according to claim 4, or system according to claim 4, wherein said watermark information word (w) represents an ID of a particular Digital cinema and a variable time stamp.

6. Method according to one of claims 1, 4 and 5, or system according to one of claims 2 to 5, wherein said watermarking uses Adaptive Spread Phase Modulation.

7. Method according to one of claims 1 and 4 to 6, or system according to one of claims 2 to 6, wherein blocks or frames of one of said pre-watermarked versions ($c_S$) are pre-watermarked with watermark symbols representing sync data ($c_{wS}$), which are inserted at receiver site into said watermarked version ($c_w$) of said original audio or video data that carries said watermark information word (w).

8. Method according to claim 6 or 7, or system according to claim 6 or 7, wherein said inserted watermark symbols representing sync data ($c_{wS}$) in each case form three different successive watermark symbols ($c_{wS1}$, $c_{wS2}$, $c_{wS3}$).

9. Method according to one of claims 1 and 4 to 8, or system according to one of claims 2 to 8, wherein each block or frame of said differently pre-watermarked versions is encrypted and decrypted, respectively, individually using a corresponding key sequence ($K_w$).

10. Method according to one of claims 1 and 4 to 9, or system according to one of claims 2 to 9, wherein said watermark information word (w) has a fixed part and a variable part, and different versions of pre-watermarked blocks or frames are used only for said variable part.

11. Method according to one of claims 5 to 10, or system according to one of claims 5 to 10, wherein said variable part represents said time stamp.

12. Method according to one of claims 1 and 4 to 11, or system according to one of claims 2 to 11, wherein one of said at least two differently pre-watermarked versions ($c_0$, $c_1$) for the successive blocks or frames ($t_4$, $t_5$, ..., $t_{n-1}$, $t_n$) of said original audio or video data represents a base version ($C^{23}_0$, ..., $C^{n-1}_0$, $C^n0$) and the successive blocks or frames of the other version or versions represent a watermark difference signal ($\Delta w^{23}_{10}$, ..., $\Delta w^{n-1}_{10}$, $\Delta w^n_{10}$) between the corresponding version and said base version.

Projection

Storage

Transport

Construction of DCP

2K projector

4K projector

2K projection system

Decryption
Extraction of 2K data
Decompression

2K/4K secure media block

4K projection system

Decryption
Decompression
Scaling

4K/2K secure media block

2K

4K

2K

4K

2K and 4K files

DCP

AES 128 bit encryption
&
Material Exchange Format
(MXF)

2K Master
2048 x 1080
JPEG-2000
24 or 48 FPS
X'Y'Z'
24 Bit 16 channel
Audio
Subtitel

DCDM

4K Master
2048 x 1080
JPEG-2000
24 or 48 FPS
X'Y'Z'
24 Bit 16 channel
Audio
Subtitel

**Fig. 1**

Fig. 2

EP 2 416 520 A1

**Fig. 3**

**Fig. 4**

Fig. 5

EP 2 416 520 A1

Time axis: $t_1$, $t_2$, $t_3$, $t_4$, $t_5$, $t_6$ ... $t_{n-1}$, $t_n$, $t_{n+1}$, $t_{n+2}$, $t_{n+3}$, $t_{n+4}$, $t$

Top row: $C_0^4$, $C_0^5$, ..., $C_0^{n-1}$, $C_0^n$    $C_0^{n+4}$

Second row: $C_1^4$, $C_1^5$, ..., $C_1^{n-1}$, $C_1^n$    $C_1^{n-4}$

Left blocks: $C_{S1}^1$, $C_{S2}^2$, $C_{S3}^3$

Right blocks: $C_{S1}^{n+1}$, $C_{S2}^{n+2}$, $C_{S1}^{n+3}$

Key Sequence
$K_w = \{K_{S1}^1, K_{S2}^2, ..., K_0^n\}$

$D(K_{S1}^1)$ $D(K_{S2}^2)$ $D(K_{S3}^3)$ $D(K_1^4)$ $D(K_0^5)$    $D(K_1^{n-1})$ $D(K_0^n)$ $D(K_{S1}^{n+1})$ $D(K_{S2}^{n+2})$ $D(K_{S3}^{n+3})$

$C_w$ | $C_{wS1}(t_1)$ | $C_{wS2}(t_2)$ | $C_{wS3}(t_3)$ | $C_{w1}(t_4)$ | $C_{w0}(t_5)$ | ... | $C_{w1}(t_{n-1})$ | $C_{w0}(t_n)$ | $C_{wS1}(t_{n+1})$ | $C_{wS2}(t_{n+2})$ | $C_{wS1}(t_{n+3})$ | $C_{w1}(t_{n+4})$

**Fig. 6**

**Fig. 7**

EP 2 416 520 A1

EP 2 416 520 A1

Sync ↔ $w_{ID}$ ↔ $w_{time}$

$t_1$  $t_2$  $t_3$  $t_4$  $t_5$  $t_6$  $\cdots$  $t_{22}$  $t_{23}$  $t_{24}$  $\cdots$  $t_{n-1}$  $t_n$  $t_{n+1}$  $t_{n+2}$  $t_{n+3}$  $t_{n+4}$  $t$

$C^1_{S1}$  $C^2_{S2}$  $C^3_{S3}$  $C^4_1$  $C^5_0$  $\cdots$  $C^{22}_1$  $C^{23}_0$  $\cdots$  $C^{n-1}_0$  $C^n_0$  $C^{n+1}_{S1}$  $C^{n+2}_{S2}$  $C^{n+3}_{S1}$  $C^{n+4}_0$

$\Delta W^{23}_{10}$  $\cdots$  $\Delta W^{n-1}_{10}$  $\Delta W^n_{10}$

**Fig. 8**

Europäisches
Patentamt

European
Patent Office

Office européen
des brevets

**EUROPEAN SEARCH REPORT**

Application Number

EP 10 30 5857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 555 650 B1 (ZHAO JIAN [US] ET AL) 30 June 2009 (2009-06-30) | 1-5,11, 12 | INV. H04L9/00 G06T1/00 |
| Y | * column 4, line 26 - column 5, line 29; figures 1,2 * * column 5, lines 32-36, 43-47 * ----- | 6-10 | |
| X | US 6 961 853 B2 (MARSHALL ALAN D [GB]) 1 November 2005 (2005-11-01) | 1-5,11, 12 | |
| Y | * column 5, line 60 - column 6, line 12; figures 2-5 * * column 6, lines 21-34 * * column 1, lines 13-29 * ----- | 6-10 | |
| Y | OLIVIER BILLET ET AL: "Efficient Traitor Tracing from Collusion Secure Codes", 10 August 2008 (2008-08-10), INFORMATION THEORETIC SECURITY; [LECTURE NOTES IN COMPUTER SCIENCE], SPRINGER BERLIN HEIDELBERG, BERLIN, HEIDELBERG, PAGE(S) 171 - 182, XP019102288, ISBN: 978-3-540-85092-2 * the whole document * ----- | 9,10 | TECHNICAL FIELDS SEARCHED (IPC) H04L G06T |
| Y | MICHAEL ARNOLD ET AL: "A Phase Modulation Audio Watermarking Technique", 8 June 2009 (2009-06-08), INFORMATION HIDING, SPRINGER BERLIN HEIDELBERG, BERLIN, HEIDELBERG, PAGE(S) 102 - 116, XP019129276, ISBN: 978-3-642-04430-4 * the whole document * ----- | 6-8 | |

-/--

The present search report has been drawn up for all claims

| Place of search | Date of completion of the search | Examiner |
|---|---|---|
| Munich | 10 January 2011 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 30 5857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DIGITAL CINEMA INITIATIVES ET AL: "Digital Cinema System Specification Version 1.2", INTERNET CITATION, 7 March 2008 (2008-03-07), pages 1-156, XP007914078, Retrieved from the Internet: URL:http://www.dcimovies.com/DCIDigitalCinemaSystemSpecv1_2.pdf [retrieved on 2010-07-22] * the whole document *  ----- | 1-12 | |

TECHNICAL FIELDS
SEARCHED    (IPC)

The present search report has been drawn up for all claims

| Place of search | Date of completion of the search | Examiner |
|---|---|---|
| Munich | 10 January 2011 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 30 5857

This annex lists the patent family members relating to the patent documents cited in  the above-mentioned European search report.
The members are as contained in the European Patent Office EDP file on
The European Patent Office is in no way liable for these particulars which are merely given for the purpose of information.

10-01-2011

| Patent document cited in search report | | Publication date | Patent family member(s) | | Publication date |
|---|---|---|---|---|---|
| US 7555650 | B1 | 30-06-2009 | NONE | | |
| US 6961853 | B2 | 01-11-2005 | EP | 1137250 A1 | 26-09-2001 |
| | | | JP | 2001309162 A | 02-11-2001 |
| | | | US | 2001025341 A1 | 27-09-2001 |

EPO FORM P0459